# EUROPEAN PATENT APPLICATION

(11) **EP 4 141 687 A1**
(43) Date of publication of application: **01.03.2023**
(21) Application number: 22197105.4
(22) Date of filing: 22.09.2022
(51) Int. Cl.: G06F 16/22, G06F 16/27

(54) **GLOBAL SECONDARY INDEX METHOD AND APPARATUS FOR DISTRIBUTED DATABASE**

(30) Priority: 24.09.2021 CN 202111124021
(71) Applicant: Beijing Baidu Netcom Science Technology Co., Ltd., Beijing 100085 (CN)
(72) Inventor: CAO, Biao, Beijing, 100085 (CN); WANG, Meng, Beijing, 100085 (CN); YANG, Yongqiang, Beijing, 100085 (CN)
(74) Representative: Studio Torta S.p.A.

(57) **Abstract**

A global secondary index method for a distributed database, includes: obtaining original data to be written in response to a database writing request; writing the original data into the distributed database; performing global secondary index processing on the original data written into the distributed database to obtain global secondary index data; establishing global secondary index tables between the global secondary index data and data table primary keys in the distributed database; and writing the global secondary index tables into an index shards based on an asynchronous processing manner.

## Description

### TECHNICAL FIELD

The disclosure relates to the field of computer technologies, especially to the field of cloud computing and cloud database, and in particular to a global secondary index method and a global secondary index apparatus for a distributed database.

### BACKGROUND

Data grow geometrically in the era of big data. Massive amounts of data grow by several terabytes or even several petabytes every day. A cloud object storage system solves the problem of mass storage, in which metadata stored by an object can be stored in a distributed database.

### SUMMARY

The disclosure provides a global secondary index method for a distributed database and a global secondary index apparatus for a distributed database.

According to an aspect of the disclosure, a global secondary index method for a distributed database is provided and includes: obtaining original data to be written in response to a database writing request; writing the original data into the distributed database; performing global secondary index processing on the original data written into the distributed database to obtain global secondary index data; establishing global secondary index tables between the global secondary index data and data table primary keys in the distributed database; and writing the global secondary index tables into index shards based on an asynchronous processing manner.

According to another aspect of the disclosure, a global secondary index apparatus for a distributed database is provided and includes: an original data writing module, configured to obtain original data to be written in response to a database writing request and write the original data into the distributed database; an index processing module, configured to perform global secondary index processing on the original data written into the distributed database to obtain global secondary index data; and an index table establishing module, configured to establish global secondary index tables between the global secondary index data and data table primary keys in the distributed database and write the global secondary index tables into index shards based on an asynchronous processing manner.

According to another aspect of the disclosure, an electronic device is provided. The electronic device includes: at least one processor and a memory communicatively coupled to the at least one processor. The memory is configured to store instructions executable by the at least one processor, and when the instructions are executed by the at least one processor, the at least one processor is enabled to perform the method according to the disclosure.

According to another aspect of the disclosure, a non-transitory computer-readable storage medium having computer instructions stored thereon is provided. The computer instructions are configured to cause a computer to perform the method according to the disclosure.

According to another aspect of the disclosure, a computer program product including computer programs is provided. When the computer programs are executed by a processor, the method according to the disclosure is performed.

According to technical solutions of the disclosure, the writing throughput of the secondary index scenario can be greatly improved, and the writing delay can be further reduced.

It should be understood that the content described in this section is not intended to identify key or important features of embodiments of the disclosure, nor is it intended to limit the scope of the disclosure. Additional features of the disclosure will be easily understood according to the following description.

### BRIEF DESCRIPTION OF THE DRAWINGS

The drawings are used to better understand the solution and do not constitute a limitation to the disclosure, in which:
FIG. 1 is a schematic diagram of a global secondary index process for a distributed database in the related art.
FIG. 2 is a flowchart of a global secondary index method for a distributed database according to some embodiments of the disclosure.
FIG. 3 is a schematic diagram of a global secondary index process for a distributed database according to some embodiments of the disclosure.
FIG. 4 is a flowchart of another global secondary index method for a distributed database according to some embodiments of the disclosure.
FIG. 5 is a block diagram of a global secondary index apparatus for a distributed database according to some embodiments of the disclosure.
FIG. 6 is a block diagram of another global secondary index apparatus for a distributed database according to some embodiments of the disclosure.
FIG. 7 is a block diagram of an electronic device for implementing a global secondary index method for a distributed database according to some embodiments of the disclosure.

### DETAILED DESCRIPTION

The following describes embodiments of the disclosure with reference to the drawings, which includes various details of embodiments of the disclosure to facilitate understanding and shall be considered merely exemplary. For clarity and conciseness, descriptions of well-known functions and structures are omitted in the following description.

It should be noted that, collection, storage and application of the user's personal information involved in technical solutions of the disclosure all comply with provisions of relevant laws and regulations, and do not violate public order and good customs.

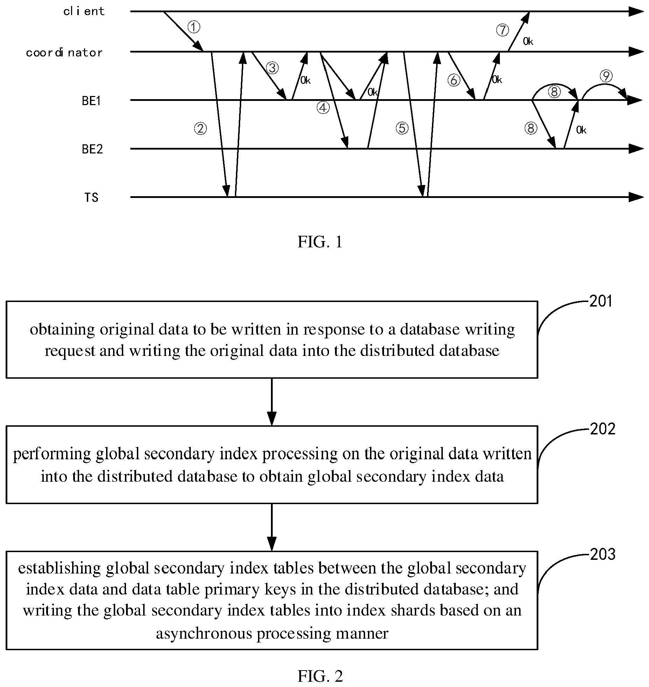

Data grow geometrically in the era of big data. Massive amounts of data grow by several terabytes or even several petabytes every day. A cloud object storage system solves the problem of mass storage, in which metadata stored by an object can be stored in a distributed database. In the related art, the distributed database generally realizes a global secondary index based on distributed transactions. As shown in FIG. 1, implementing the global secondary index based on 2PC includes ①-⑨

The process of ①-⑨ are as follows.
① The client sends an insert request to any coordinator in the system. After the coordinator receives the request, a transaction is constructed by lexical and syntax analysis on a structured query language (SQL) statement. The value to be inserted can be written into the system through the transaction process.
② The two-phase process of executing the transaction starts from this step. First, a start timestamp of this transaction is obtained by accessing to a TS (a middleware in the distributed transaction).
③ In this step, a node (BE1) is selected from transaction participants (BE) to store txn meta (metadata of data), and the coordinator writes the txn meta into BE1.
④ Prewrite of data is performed here. The data to be written are sent to the corresponding BE and are persisted as an intent (a tool for transferring data). Due to the existence of the index, it is necessary to write the intent twice, such as writing the base (data) once and writing the index once.
⑤ The TS is visited to obtain the commit timestamp of this transaction.
⑥ After all intents in step ⑤ are written successfully, the transaction can be submitted, and a commit txn (submitting data) command is sent to BE1, and a state of the txn meta is set to a committed state. At this point the transaction state has been determined.
(7) After the transaction state is determined, the result of the insert can be returned to the client.
⑧ After the transaction is committed, the BE can initiate an asynchronous resolve in the background. The intent is modified to the corresponding value according to the transaction state.
⑨ After all intents are resolved successfully, the txn meta is useless, and the txn meta is deleted here. At this point, all processing of the transaction is over.

It can be seen from the above description that the distributed database in the related art implements the global secondary index based on distributed transactions. However, the above-mentioned global secondary index manner has the following problems. Due to the existence of the index, in order to ensure the atomicity of the primary key and the index, the distributed transaction process is triggered, and the cost of the distributed transaction is very large. For example, one transaction write needs 7 remote procedure calls (RPCs), 7 times of writing into consensus algorithm Raft log and 7 times of writing key value Rocksdb, resulting in a very high cost of index writing.

Based on the above problems, the disclosure proposes a global secondary index method and a global secondary index apparatus for a distributed database. It should be noted that technical solutions of the disclosure can be applied to a service scenario that does not need to guarantee the atomicity of index writing. Optionally, this disclosure aims at requests for most services of the system without requiring distributed transactions. Users do not need to ensure the atomicity of index writing. After the primary key is written, it is only necessary to ensure that the index at the hour-level is visible. Based on characteristics of these services, this disclosure proposes an asynchronous global secondary index scheme. The following describes the global secondary index method and the global secondary index apparatus for the distributed database according to some embodiments of the disclosure with reference to the accompanying drawings.

FIG. 2 is a flowchart of a global secondary index method for a distributed database according to some embodiments of the disclosure. It should be noted that the global secondary index method for the distributed database according to some embodiments of the disclosure can be applied to the global secondary index apparatus for the distributed database according to some embodiments of the disclosure, and the global secondary index apparatus can be configured on a computer device.

As shown in FIG. 2, the global secondary index method for the distributed database may include at least but not limited to steps 201 to 203.

In step 201, original data to be written are obtained in response to a database writing request, and the original data are written into the distributed database.

In some embodiments of the disclosure, the database writing request may include a table establishing statement. The table establishing statement may include one or more SQL statements. Alternatively, the database writing request may also include other statements, which are not limited in this disclosure.

For example, taking the database writing request as the table establishing SQL statement as an example, when receiving the table establishing SQL statement sent by the client, lexical and syntax analysis can be performed on the table establishing SQL statement to determine the original data to be written, and the original data are loaded from the data source to obtain the original data to be written, and the obtained original data to be written are written into the distributed database. In some embodiments of the disclosure, the original data may be understood as primary key data.

In some embodiments of the disclosure, after obtaining the original data to be written, the original data to be written may be written into a data buffer queue, and the data buffer queue is sent to a storage node for data persistence processing; a data persistence processing result is received from the storage node, and the data persistence processing result is sent to an initiator of the database writing request. That is, when receiving the database writing request from the client, the original data to be written can be written to the distributed database for persistence, and the result is returned to the client.

In step 202, global secondary index processing is performed on the original data written into the distributed database to obtain global secondary index data.

Optionally, when the original data to be written are written into the distributed database, indexes of the original data written into the distributed database are constructed asynchronously. It should be noted that, because embodiments of the disclosure are applicable to service scenarios that do not need to guarantee the atomicity of index writing, that is to say, service scenarios do not need to guarantee the atomicity of index writing, the index at the hour-level can be ensured to be visible after the primary key is written. The level index is visible, for example, the index can be created and written within an hour. Based on characteristics of these service scenarios, embodiments of the disclosure propose an asynchronous global secondary index, that is, when the original data to be written are written into the distributed database, the indexes of the data written into the distributed database are constructed asynchronously.

In step 203, global secondary index tables between the global secondary index data and a data table primary keys in the distributed database are established and the global secondary index tables are written into index shards based on an asynchronous processing manner.

Optionally, after the global secondary index data are obtained, the global secondary index tables between the global secondary index data and the data table primary keys in the distributed database can be established, and based on the asynchronous processing manner, the global secondary index tables are written into the index shards in batches. For example, 1000 global secondary index tables can be written into the index shards in batches.

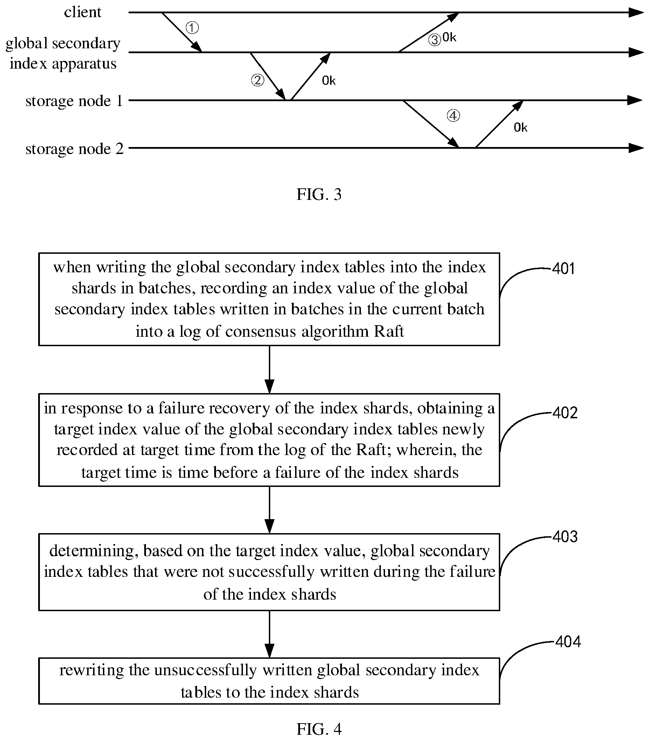

For example, as shown in FIG. 3, ① after receiving a database writing request from a client, the original data to be written are written into the data buffer queue. (2) The data buffer queue is sent to the storage node for data persistence processing. ③ The data persistence processing result returned by the storage node is received, and the data persistence processing result is sent to the initiator of the database writing request. ④ Global secondary index processing is performed on the original data written into the distributed database to obtain global secondary index data, and global secondary index tables of corresponding between the global secondary index data and the data table primary keys in the distributed database are established asynchronously, and the global secondary index tables are written into the index shards based on asynchronous processing. It can be seen that the asynchronous secondary index solution provided by this disclosure requires a total of 2 RPCs, 2 times of writing into Raft log, and 2 times of writing into Rocksdb, in which one RPC, one time of writing into Raft log, and one time of writing into Rocksdb may affect the client delay. Compared with the secondary index process in the related art, 5 RPCs, 5 times of writing into Raft log, and 5 times of writing into Rocksdb are reduced, which means that the disclosure can further reduce the writing delay, and also greatly improve the writing throughput.

According to the global secondary index method for the distributed database according to some embodiment of the disclosure, after receiving the database writing request, the original data to be written are obtained, and the original data are written into the distributed database, that is, after the original data are written into the distributed database, the global secondary index can be constructed asynchronously, which may greatly improve the writing throughput of the secondary index scenario and further reduce the writing delay.

In order to ensure that the index data are not lost and reusable, and to ensure the integrity of the index data, optionally, in some embodiments of the disclosure, on the basis of embodiments shown in FIG. 2, as shown in FIG. 4, the global secondary index method for the distributed database may further include the following steps.

In step 401, when writing the global secondary index tables into the index shards in batches, an index value of the global secondary index tables written in batches in the current batch is recorded into a log of consensus algorithm Raft.

In some embodiments of the disclosure, the index value includes a last index value written into the index shards of the global secondary index tables in the current batch.

For example, 1000 global secondary index tables are written to the index shards in batches in each batch. Assuming that the first batch of 1000 global secondary index tables are written to the index shards, and the index value of the last global secondary index tables written to the index shards in the first batch is recorded into the Raft log, for example, the index value is 1000. The second batch of 1000 global secondary index tables are written to the index shards in batches, and the index value of the last global secondary index tables written to the index shards in the second batch is recorded into the Raft log, for example, the index value is, and so on.

That is to say, when writing the global secondary index tables into the index shards in batches, the index value of the global secondary index tables written in batches by the current batch can be checked, and the checked current index value can be recorded into the Raft log. That is, when asynchronously sending the global secondary index tables to the index shards in batches, it can periodically check and record the index value of the global secondary index tables sent for the last time in each batch, so that when the failure of the index shards is recovered, the index value recorded in the Raft log may be used to find the index to be written before the failure, so as to ensure that the data are not lost or repeated.

Optionally, in some embodiments of the disclosure, as shown in FIG. 4, the global secondary index method for the distributed database may further include the following steps.

In step 402, in response to a failure recovery of the index shards, a target index value of the global secondary index tables newly recorded at target time is obtained from the log of the Raft; in which, the target time is time before a failure of the index shards.

Optionally, when the index shards fail and recover, the latest recorded target index value of the global secondary index tables in the time before the failure of the index shards can be obtained from the log of the Raft.

In step 403, based on the target index value, global secondary index tables that were not successfully written during the failure of the index shards are determined.

In step 404, the unsuccessfully written global secondary index tables are rewritten into the index shards.

That is to say, when the index shards fail and recover, the global secondary index tables that were not successfully written before the index shards fail can be rewritten to the index shards, so as to ensure that the index data will not be lost or repeated and ensure the integrity of index data.

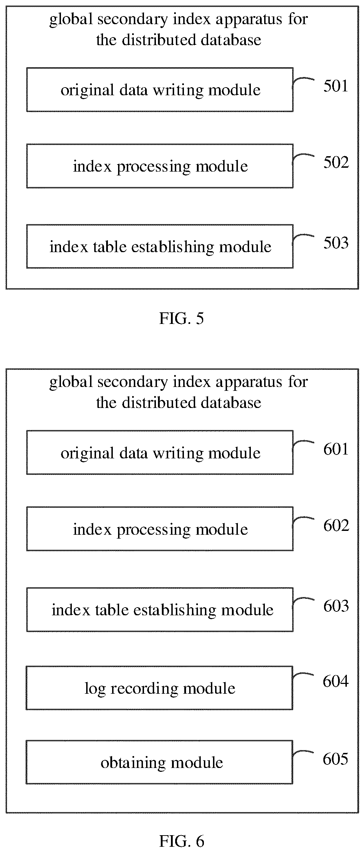

FIG. 5 is a block diagram of a global secondary index apparatus for a distributed database according to some embodiments of the disclosure. As shown in FIG. 5, the global secondary index apparatus for the distributed database may include an original data writing module 501, an index processing module 502 and an index table establishing module 503.

The original data writing module 501 is configured to obtain original data to be written in response to a database writing request and write the original data into the distributed database. As an example, the original data writing module 501 is configured to: write the original data into a data buffer queue; send the data buffer queue to a storage node for data persistence processing; receive a data persistence processing result from the storage node; and send the data persistence processing result to an initiator of the database writing request.

The index processing module 502 is configured to perform global secondary index processing on the original data written into the distributed database to obtain global secondary index data.

The index table establishing module 503 is configured to establish global secondary index tables between the global secondary index data and data table primary keys in the distributed database and write the global secondary index tables into index shards based on an asynchronous processing manner. As an example, the index table establishing module 503 is configured to: write the global secondary index tables into the index shards in batches based on the asynchronous processing manner.

Optionally, in some embodiments of the disclosure, based on the embodiments shown in FIG. 5, as shown in FIG. 6, the global secondary index apparatus for the distributed database may further include: a log recording module 604, configured to, when writing the global secondary index tables into the index shards in batches, record an index value of the global secondary index tables written in batches in the current batch into a log of consensus algorithm Raft. The index value includes a last index value written into the index shards of the global secondary index tables in the current batch.

In some embodiments of the disclosure, as shown in FIG. 6, the global secondary index apparatus for the distributed database may further include: an obtaining module 605, configured to, in response to a failure recovery of the index shards, obtain a target index value of the global secondary index tables newly recorded at target time from the log of the Raft; wherein, the target time is time before a failure of the index shards.

In some embodiments of the disclosure, the index table establishing module 603 is further configured to, determine, based on the target index value, global secondary index tables that were not successfully written during the failure of the index shards; and rewrite the unsuccessfully written global secondary index tables to the index shards.

601-603 in FIG. 6 and 501-503 in FIG. 5 have the same function and structure.

Regarding the apparatus in the above-mentioned embodiments, the specific manner in which each module performs operations has been described in detail in embodiments of the method, and will not be described in detail herein.

According to the global secondary index apparatus for the distributed database according to some embodiment of the disclosure, after receiving the database writing request, the original data to be written are obtained, and the original data are written into the distributed database, that is, after the original data are written into the distributed database, the global secondary index can be constructed asynchronously, which may greatly improve the writing throughput of the secondary index scenario and further reduce the writing delay.

According to some embodiments of the disclosure, the disclosure also provides an electronic device, and a readable storage medium.

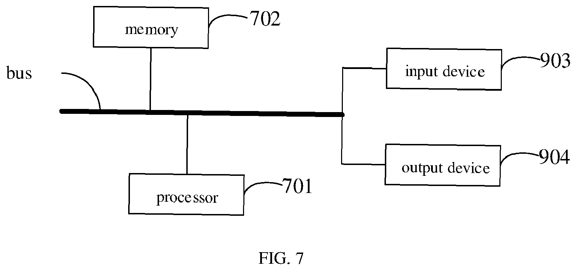

FIG. 7 is a block diagram of an electronic device for implementing a global secondary index method for a distributed database according to some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 7, the electronic device includes: one or more processors 701, a memory 702, and interfaces for connecting various components, including a high-speed interface and a low-speed interface. The various components are interconnected using different buses and may be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 701 is taken as an example in FIG. 7.

The memory 702 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 702 is configured to store non-transitory software programs, non-transitory computer executable programs and modules, such as program instructions/modules corresponding to the method in the embodiment of the disclosure. The processor 701 executes various functional applications and data processing of the server by running non-transitory software programs, instructions, and modules stored in the memory 702, that is, implementing the method in the foregoing method embodiments.

The memory 702 may include a storage program area and a storage data area, where the storage program area may store an operating system and application programs required for at least one function. The storage data area may store data created according to the use of the electronic device, and the like. In addition, the memory 702 may include a high-speed random access memory, and a non-transitory memory, such as at least one magnetic disk storage device, a flash memory device, or other non-transitory solid-state storage device. In some embodiments, the memory 702 may optionally include a memory remotely disposed with respect to the processor 701, and these remote memories may be connected to the electronic device through a network. Examples of the above network include, but are not limited to, the Internet, an intranet, a local area network, a mobile communication network, and combinations thereof.

The electronic device for implementing the method may further include: an input device 703 and an output device 704. The processor 701, the memory 702, the input device 703, and the output device 704 may be connected through a bus or in other manners. In FIG. 7, the connection through the bus is taken as an example.

The input device 703 may receive inputted numeric or character information, and generate key signal inputs related to user settings and function control of an electronic device, such as a touch screen, a keypad, a mouse, a trackpad, a touchpad, an indication rod, one or more mouse buttons, trackballs, joysticks and other input devices. The output device 704 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host. It is a host product in the cloud computing service system to solve the shortcomings of difficult management and weak scalability in the conventional physical host and the VPS service ("Virtual Private Server").

It should be understood that various forms of processes shown above may be used to reorder, add, or delete steps. For example, the steps described in the disclosure may be performed in parallel, sequentially, or in different orders. As long as the desired results of the technical solutions disclosed in the disclosure can be achieved, no limitation is made herein.

The above specific embodiments do not constitute a limitation on the protection scope of the disclosure. Those skilled in the art should understand that various modifications, combinations, sub-combinations and substitutions can be made according to design requirements and other factors.

## Claims

1. A global secondary index method for a distributed database, comprising:
obtaining (201) original data to be written in response to a database writing request;
writing (201) the original data into the distributed database;
performing (202) global secondary index processing on the original data written into the distributed database to obtain global secondary index data;
establishing (203) global secondary index tables between the global secondary index data and data table primary keys in the distributed database; and
writing (203) the global secondary index tables into index shards based on an asynchronous processing manner.

2. The method of claim 1, wherein writing (201) the original data into the distributed database comprises:
writing the original data into a data buffer queue;
sending the data buffer queue to a storage node for data persistence processing;
receiving a data persistence processing result from the storage node; and
sending the data persistence processing result to an initiator of the database writing request.

3. The method of claim 1 or 2, wherein writing (203) the global secondary index tables into the index shards based on the asynchronous processing manner comprises:
writing the global secondary index tables into the index shards in batches based on the asynchronous processing manner.

4. The method of claim 3, further comprising:
when writing the global secondary index tables into the index shards in batches, recording (401) an index value of the global secondary index tables written in batches in the current batch into a log of consensus algorithm Raft.

5. The method of claim 4, wherein the index value comprises a last index value written into the index shards of the global secondary index tables in the current batch.

6. The method of claim 4 or 5, further comprising:
in response to a failure recovery of the index shards, obtaining (402) a target index value of the global secondary index tables newly recorded at target time from the log of the Raft; wherein, the target time is time before a failure of the index shards;
determining (403), based on the target index value, global secondary index tables that were not successfully written during the failure of the index shards; and
rewriting (404) the unsuccessfully written global secondary index tables to the index shards.

7. A global secondary index apparatus for a distributed database, comprising:
an original data writing module (501), configured to obtain original data to be written in response to a database writing request and write the original data into the distributed database;
an index processing module (502), configured to perform global secondary index processing on the original data written into the distributed database to obtain global secondary index data; and
an index table establishing module (503), configured to establish global secondary index tables between the global secondary index data and data table primary keys in the distributed database and write the global secondary index tables into index shards based on an asynchronous processing manner.

8. The apparatus of claim 7, wherein the original data writing module (501) is configured to:
write the original data into a data buffer queue;
send the data buffer queue to a storage node for data persistence processing;
receive a data persistence processing result from the storage node; and
send the data persistence processing result to an initiator of the database writing request.

9. The apparatus of claim 7 or 8, wherein the index table establishing module (503) is configured to:
write the global secondary index tables into the index shards in batches based on the asynchronous processing manner.

10. The apparatus of claim 9, further comprising:
a log recording module (604), configured to, when writing the global secondary index tables into the index shards in batches, record an index value of the global secondary index tables written in batches in the current batch into a log of consensus algorithm Raft.

11. The apparatus of claim 10, wherein the index value comprises a last index value written into the index shards of the global secondary index tables in the current batch.

12. The apparatus of claim 10 or 11, further comprising:
an obtaining module (605), configured to, in response to a failure recovery of the index shards, obtain a target index value of the global secondary index tables newly recorded at target time from the log of the Raft; wherein, the target time is time before a failure of the index shards;
wherein, the index table establishing module (603) is further configured to, determine, based on the target index value, global secondary index tables that were not successfully written during the failure of the index shards; and rewrite the unsuccessfully written global secondary index tables to the index shards.

13. An electronic device, comprising:
a processor; and
a memory communicatively coupled to the processor; wherein,
the memory is configured to store instructions executable by the at least one processor, and when the instructions are executed by the processor, the is enabled to perform the method according to any one of claims 1-6.

14. A non-transitory computer-readable storage medium having computer instructions stored thereon, wherein the computer instructions are configured to cause a computer to perform the method according to any one of claims 1-6.

15. A computer program product comprising computer programs, wherein when the computer programs are executed by a processor, the method according to any one of claims 1-6 is performed.
